# EUROPÄISCHE PATENTSCHRIFT

(11) **EP 3 142 464 B1**
(45) Veröffentlichungstag und Bekanntmachung des Hinweises auf die Patenterteilung: **14.07.2021**
(21) Anmeldenummer: 16187976.2
(22) Anmeldetag: 09.09.2016
(51) Int. Cl.: H05B 45/10, H05B 45/37, H05B 45/58, H05B 47/11, H05B 47/21, F21S 2/00, H05B 33/08

(54) **BELEUCHTUNGSSYSTEM**
LIGHTING SYSTEM
SYSTEME D'ECLAIRAGE

(30) Priorität: 11.09.2015 DE 102015217392; 18.12.2015 DE 102015225978
(43) Veröffentlichungstag der Anmeldung: 15.03.2017
(73) Patentinhaber: Tridonic GmbH & Co KG, 6851 Dornbirn (AT)
(72) Erfinder: Koch, Patrik Yves, 88085 Langenargen (DE); Schmidt, Gabor, 6850 Dornbirn (AT)
(74) Vertreter: Rupp, Christian

(56) Entgegenhaltungen:
- EP-A2- 1 696 707
- WO-A1-2012/129243
- WO-A2-2008/104927
- DE-A1-102010 031 242
- US-A1- 2013 221 858
- None

## Beschreibung

Die Erfindung betrifft ein Beleuchtungssystem.

Vor Installation eines Beleuchtungssystems innerhalb eines Gebäudeteils erfolgt typischerweise eine Lichtplanung, denn gegebenenfalls ist ein Büro als Gebäudeteil anders auszuleuchten, als ein Flur als Gebäudeteil. In dieser Lichtplanungsphase eines Beleuchtungssystems wird zunächst mittels eines Lichtplanungsprogramms eine Lichtplanungsinformation ermittelt.

Dabei wird ausgehend von Soll-Beleuchtungsstärken an zumindest einer definierten Position in einem Gebäudeteil, beispielsweise an der Oberfläche einer Arbeitsfläche in einem Büro und/oder einer Montagehalle und/oder einer definierten Fläche in einem Flur, die dazu benötigte Auslegung des Beleuchtungssystems berechnet, wobei insbesondere die Anzahl, die Platzierung und ggf. geforderte Beleuchtungsparameter von Lichtquellen für diese spezielle Position im Gebäudeteil zu berechnen sind.

Im Folgenden umfasst der Begriff "Lichtplanungsinformation" zumindest Soll-Beleuchtungsstärken an definierten Positionen in einem Gebäudeteil, die von dem Beleuchtungssystem beleuchtet werden. Weiterhin umfasst der Begriff "Lichtplanungsinformation" eine ermittelte Anzahl von Leuchten zum Erhalten der Soll-Beleuchtungsstärke, einer Abstandsinformation der einzelnen Leuchten untereinander und ggf. den geforderten Abstrahlwinkel, den die Leuchte aufweisen soll. Eine Leuchte umfasst dabei zumindest ein Leuchtmittel, als zumindest ein lichterzeugendes Element, beispielsweise in Form einer LED, einer OLED und/oder einer Gasentladelampe.

Die Lichtplanungsinformation beinhaltet sowohl die Parameter der lichterzeugenden Elemente selbst sowie auch alle lichtlenkenden Eigenschaften einer Leuchte. Sodann können durch das Lichtplanungsprogramm normativ geforderte Beleuchtungsparameter aus der Lichtplanungsinformation berechnet und abhängig davon Parameter für die Leuchte selbst - beispielsweise ein Reflektortyp, ein verwendeter Linsentyp oder ein Diffusor - bestimmt werden und/oder der Leuchtmitteltyp, die Leuchtmittelposition und/oder die Leuchtmittelansteuerung festgelegt werden. Die während dieser Lichtplanungsphase des Beleuchtungssystems errechneten Beleuchtungsparameter werden dann an das geplante Beleuchtungssystem übertragen. Darüber hinaus wird eine Steuereinheit im Beleuchtungssystem dazu verwendet, um Steuersignale für zumindest eine der Leuchten aus den errechneten Beleuchtungsparametern zu generieren.

Heutige Beleuchtungssysteme sind in der Lage, während der Betriebsphase festzustellen, ob eine Leuchte oder ein Leuchtmittel in der Leuchte bestimmungsgemäß betrieben wird oder ob ungewünschte Änderungen der Beleuchtungsparameter vorliegen. Bei festgestellten - ungewollten - Änderungen wird durch das Beleuchtungssystem eine Warnmeldung generiert und an ein Gebäudeverwaltungssystem als Zentraleinheit übermittelt. Beispielsweise kann so der Ausfall eines Leuchtmittels bzw. einer Leuchte bzw. eine signifikante Verdunklung eines Teils eines Gebäudeteils gemeldet werden. Das Gebäudeverwaltungssystem als Zentraleinheit des Beleuchtungssystems kann dabei sogar erfahren, welches konkrete Leuchtmittel bzw. Leuchte welche Änderung aufweist.

Nachteilig an den heutigen Beleuchtungssystemen ist es, dass bis zur jeweiligen Reparatur des Leuchtmittels oder der Leuchte bzw. Kompensation der Beleuchtungsveränderung keine Anpassung der übrigen Leuchtmittel oder Leuchten innerhalb des Beleuchtungssystems erfolgt. Somit kann ein nicht ordnungsgemäß funktionierendes Leuchtmittel bzw. Leuchte über mehrere Tage oder Wochen hinweg nicht kompensiert sein, was zu Sicherheitsmängeln oder zumindest Beeinträchtigungen in dem Gebäudeteil führen kann.

Die Druckschrift EP 1 696 707 A2 offenbart eine Leuchte mit wenigstens einem Leuchtmittel, das über eine Signalleitung steuerbar ansprechbar ist, wobei die Leuchte einen Speicher aufweist, in den ein Datensatz eingeschrieben ist, der wenigstens eine Eigenschaft dieses Leuchtmittels beschreibt.

Die Druckschrift WO 2012/129243 A1 offenbart Verfahren, Vorrichtungen und Systeme zur Bereitstellung einer anwesenheitsabhängigen variablen Beleuchtung.

Die Druckschrift WO 2008/104927 A2 offenbart ein computergesteuertes Beleuchtungssystem mit mindestens einer Leuchte zum Beleuchten einer Arbeitsfläche und einer Verarbeitungseinheit zum automatischen Berechnen von Konfigurationsparametern, die es ermöglichen, die mindestens eine Leuchte so zu konfigurieren, dass eine gewünschte Beleuchtung der Arbeitsfläche erreichbar ist. Die Druckschrift US 2013/0221858 A1 offenbart ein Ad-hoc-Leuchtensteuerungssystem, welches mit Leuchten in der Nähe kommuniziert, um einen Leuchtencluster zu identifizieren, sowie ein zentrales oder mobiles Leuchtensteuerungssystem, welches eine Cluster-Beschreibung von einer oder mehreren Leuchten empfängt, und auf der Grundlage der empfangenen Cluster-Beschreibungen eine Leuchten-Topologie bestimmt.

Aufgabe der hier vorliegenden Erfindung ist es, eine - ungewollte - Änderung eines Beleuchtungsparameters im Beleuchtungssystem auf einfache Weise zu kompensieren. Diese Aufgabe wird mit den in den nebengeordneten Patentansprüchen beschriebenen Maßnahmen gelöst.

Das erfindungsgemäße Beleuchtungssystem umfasst: mehrere Leuchten, welche zum Beleuchten eines Gebäudeteils ausgebildet sind, eine Steuereinheit, eingerichtet zum Einstellen und Steuern jeweils eines Beleuchtungsparameters der Leuchten, eine Schnittstelle, eingerichtet zum Übertragen elektrischer Steuersignale zwischen den Leuchten und der Steuereinheit, wobei die Steuersignale jeweils zumindest einen Steuerparameter beinhalten, wobei mittels des Steuerparameters die Leuchten individuell zur Beleuchtung des Gebäudeteils ansteuerbar sind, einen Speicher, in dem zumindest eine Lichtplanungsinformation des Beleuchtungssystems abgelegt ist, wobei die Lichtplanungsinformation Soll-Beleuchtungsstärken an definierten Positionen in dem Gebäudeteil, die von dem Beleuchtungssystem beleuchtet werden, umfasst, und ein Sensorelement, das dazu eingerichtet ist die Veränderung eines Lichtparameters des Beleuchtungssystems zu erfassen, und eine Meldung zu generieren, wenn aufgrund eines Defekts zumindest einer der Leuchten im Beleuchtungssystem die Beleuchtungsstärke bzw. der Lichtstrom zumindest eines Leuchtmittels der zumindest einen Leuchte reduziert ist, wobei die Steuereinheit dazu eingerichtet ist, während einer Betriebsphase des Beleuchtungssystems auf den Speicher zuzugreifen, um die Steuersignale auf Basis der Lichtplanungsinformation anzupassen, wenn die Meldung, generiert wurde, dass ein Lichtparameter des Beleuchtungssystems aufgrund eines Defekts zumindest einer der Leuchten im Beleuchtungssystem verändert ist. Das Beleuchtungssystem ist dazu eingerichtet, die Steuerparameter der Steuersignale anhand einer vordefinierten Priorisierung anzupassen, und eine Vorausberechnung und eine Überprüfung, ob durch Änderung von Beleuchtungsparametern eine akzeptable Kompensation des Defekts der zumindest einen der Leuchten durch benachbarte Leuchten erreicht werden kann, durchzuführen.

Die Steuereinheit ist ferner ausgebildet, die zumindest eine defekte Leuchte auf Basis von Informationen über die Alterung der Leuchtmittel im Beleuchtungssystem zu identifizieren.

Der Speicher ist dabei als Datenspeicher in der Steuereinheit vorgesehen und ermöglicht das Ablegen der Lichtplanungsinformation aus der Lichtplanungsphase, auf die sodann im Betrieb des Beleuchtungssystems zugegriffen werden kann, um das Beleuchtungssystem anhand der Lichtplanungsinformationen aufgrund zu kompensierender Änderungen anzupassen. Durch den Zugriff auf den Speicher mit der Lichtplanungsinformation kann das elektrische Steuersignal für ein Beleuchtungsmittel kompensatorisch angepasst werden, um erfasste Änderungen des Beleuchtungssystems, beispielsweise verursacht durch den Ausfall eines speziellen Leuchtmittels oder einer Leuchte, einer Alterung oder einer alternativ begründeten signifikanten Abschwächung der Beleuchtungsstärke während eines Betriebs des Beleuchtungssystems zu kompensieren.

Dabei ist ein Leuchtmittel eine einzelne LED oder eine Gruppe von LEDs. Beispielsweise kann eine Leuchte eine einzelne Leuchtdiode oder eine Gruppe von Leuchtdioden, beispielsweise von in Serie geschalteten Leuchtdioden als LED-Strecke aufweisen. Überdies kann eine Leuchte Teil einer Leuchten-Steuergruppe sein. Die Leuchte zur Beleuchtung des Gebäudeteils ist somit auch als ein Teil eines Beleuchtungssubsystems innerhalb eines Beleuchtungssystems zu verstehen.

Dabei ist ein Gebäudeteil beispielsweise ein Flur, ein Raum, eine Etage, ein Büro oder ein Großraumbüro des Gebäudes. Bevorzugt ist der Gebäudeteil im Inneren eines Gebäudes angeordnet.

Eine Steuereinheit ist dabei zum Einstellen und Steuern eines Beleuchtungsparameters des Leuchtmittels und/oder der Leuchte vorgesehen. Dieser Beleuchtungsparameter ist während einer Lichtplanungsphase des Beleuchtungssystems ermittelt worden und dient im Beleuchtungssystem für einen ordentlichen Betrieb des Leuchtmittels.

Die Steuereinheit erzeugt elektrische Steuersignale für das Leuchtmittel, um einen bestimmungsgemäßen Betrieb des Leuchtmittels zu bewirken.

Dabei wird eine Meldung generiert, dass zumindest ein Lichtparameter als Beleuchtungsparameter des Beleuchtungssystems verändert wurde. Diese Meldung wird bevorzugt von einer Leuchte selbst generiert. Dabei weist die Leuchte eine Schnittstelle zum Übertragen der Meldung an die Zentraleinheit und/oder die Steuereinheit auf. Diese Schnittstelle ist in einer Ausgestaltung die gleiche Schnittstelle, über welche das Steuersignal übertragen wird. Diese Meldung ist beispielsweise eine Fehlermeldung der Leuchte, in welcher die Information enthalten ist, dass ein Leuchtmittel der Leuchte oder die Leuchte selbst defekt ist, also einen sehr geringen oder keinen Lichtstrom als Lichtparameter erzeugt. Alternativ ist diese Meldung beispielsweise eine Fehlermeldung der Leuchte, in welcher die Information enthalten ist, dass eines der Leuchtmittel oder die Leuchte selbst einen Lichtstrom unterhalb eines voreingestellten Schwellwerts erzeugt. Ein derartig geringer Lichtstrom wird beispielsweise aufgrund der Alterung eines der Leuchtmittel generiert. Die Leuchte zeigt somit mittels der Meldung an, dass ein Lichtparameter ungewollt verändert wurde.

Erkennt die Steuereinheit eine Veränderung des Beleuchtungsparameters, beispielsweise durch Ausfall eines Leuchtmittels oder einer Abschwächung der Leuchtstärke eines Leuchtmittels oder die Alterung des Leuchtmittels oder einer Veränderung an den lichtlenkenden Elementen der Leuchte, so erfolgt erfindungsgemäß durch das Beleuchtungssystem ein Zugriff auf eine Lichtplanungsinformation aus einer Lichtplanungsphase des Beleuchtungssystems, um das elektrische Steuersignal entsprechend anzupassen. Die Anpassung erfolgt auf Basis der vorhergehenden Berechnungen und ermöglicht eine Anpassung übriger Leuchtmittel zur Kompensation von sich ändernden Leuchtmittelparametern eines Leuchtmittels ohne, dass aufwendige Kalibrierungen oder Messungen durchgeführt werden müssen.

Zunächst ist davon auszugehen, dass die Lichtplanungsinformation statisch ist. Das heißt, die Lichtplanungsinformation wird nach Abschluss der Lichtplanung nicht angepasst.

Ein wichtiger Aspekt der Erfindung ist es, dass bei Ausfall einer Leuchte die Lichtplanung mit den ungewollt geänderten Beleuchtungsparametern - zumindest in Teilen - durchgeführt wird. Dies dient dazu, zu berechnen, ob durch Änderung von Lichtparameter der benachbarten Leuchten überhaupt eine akzeptable Kompensation erreicht werden kann oder ob beispielsweise durch Änderung des Abstrahlwinkels von einer der Leuchten eine unerwünschte Blendung auftritt.

Es wird erfindungsgemäß also die Auswirkung einer möglichen Kompensationsmaßnahme virtuell vorausberechnet, ohne eine zunächst reale Anpassung des Beleuchtungssystems durchzuführen, bzw. in einem weiteren Schritt deren reale Auswirkung via Sensorsignalen von Sensorelementen zu erfassen, um die Auswirkungen der Kompensationsmaßnahme zu überprüfen und beispielsweise durch iterative Anpassung der Kompensationsmaßname den gewünschten Beleuchtungsparameter einzustellen.

Das Erkennen der Veränderungen erfolgt beispielsweise mittels einer Sensorschaltung, die die aktuelle Beleuchtungsstärke bzw. den Lichtstrom an dem definierten Ort im Gebäudeteil erfasst. Die aktuelle Beleuchtungsstärke wird in der Steuereinheit mittels einer Vergleichseinheit mit der Soll-Beleuchtungsstärke aus der im Speicher abgelegten Lichtplanungsinformation verglichen. Ergibt der Vergleich einen signifikanten Unterschied, beispielsweise eine Überschreitung einer Toleranzgrenze von 10 Prozent, werden Kompensationsmaßnahmen eingeleitet.

Die Sensorschaltung kann dabei Teil des Leuchtmittels oder des Betriebsgeräts für das Leuchtmittel sein oder alternativ als eigenständiges Sensorelement im Beleuchtungssystem integriert sein.

Das Erkennen der Veränderung erfolgt alternativ oder zusätzlich durch das Einbringen einer Erkennungsschaltung in das Beleuchtungssystem. Die Erkennungsschaltung ist beispielsweise direkt in einem Betriebsgerät der Leuchte untergebracht, eine Steuereinheit des Beleuchtungssystems wertet die Signale der Erkennungsschaltung entsprechend aus. Alternativ bilden die Steuereinheit und das Betriebsgerät eine Einheit zum Betreiben der Leuchte. Durch die Steuereinheit, welche beispielsweise den Ausfall eines Leuchtmittels oder der Leuchte erkennt, leitet entsprechend Kompensationsmaßnahmen ein.

Die Schnittstelle ist innerhalb des Beleuchtungssystems als eine entsprechend ausgestaltete elektrische Verbindung zwischen der Leuchte und der Steuereinheit des Beleuchtungssystems, beispielsweise eine DALI-Schnittstelle, ausgebildet. Diese Schnittstelle überträgt die Steuersignale und/oder die Meldung über die Lichtparameterveränderung.

Erfindungsgemäß beinhaltet das Steuersignal zumindest einen Steuerparameter, wobei mittels des Steuerparameters die Leuchte individuell zur Beleuchtung des jeweiligen Gebäudeteils angesteuert wird. Als Steuerparameter ist beispielsweise ein Abstrahlwinkel oder eine Abstrahlcharakteristik eines lichtumlenkenden Elements der Leuchte oder eine Farbinformation bzw. eine Beleuchtungsdauer eines der Leuchtmittel der Leuchte zu verstehen. Weiterhin kann als Steuerparameter auch eine Hauptabstrahlrichtung zu verstehen sein. Überdies kann der Steuerparameter auch eine Information über ein Dimmverhalten, beispielsweise ein PWM-Steuerparameter oder ein Lichtparameter sein. Weiterhein kann der Steuerparameter auch beispielsweise eine Beleuchtungsstärke oder ein Lichtstrom-Parameter sein. Überdies kann der Steuerparameter auch eine Information bezüglich des Betreibens als direkte oder indirekte Leuchte aufweisen.

Durch dieses Steuersignal wird das Leuchtmittel innerhalb des Beleuchtungssystems individuell auf die aktuellen Gegebenheiten des Gebäudeteils angepasst, beispielsweise auf die Ausgestaltung eines Büros, die Anordnung einer Arbeitsfläche oder die Anpassung an eine Fluchtwegsituation.

In einer bevorzugten Ausgestaltung ist die Steuereinheit dazu eingerichtet, bei einer - nicht von der Steuereinheit bewusst hervorgerufenen - Veränderung von zumindest einem Lichtparameter als Beleuchtungsparameter im Beleuchtungssystem angepasste Steuersignale auf Basis der Lichtplanungsinformation zu errechnen und an die Leuchte als Steuersignal zu senden. Als Lichtparameter ist hierbei insbesondere eine Reduzierung der Beleuchtungsstärke bzw. des Lichtstromes zumindest eines der Leuchtmittel zu verstehen. Diese Änderung erfolgt beispielsweise aufgrund eines Ausfalls eines Leuchtmittels oder einer Leuchte in Form eines Defekts oder aufgrund einer Degeneration eines der Leuchtmittel infolge einer Alterung. Diese Veränderung kann seitens eines Betriebsgeräts der Leuchte oder seitens der Leuchte selbst erkannt werden. Diese Veränderung wird dem Beleuchtungssystem als eine Meldung bereitgestellt werden. Fällt eine Leuchte komplett aus, so ist beispielsweise der Stromfluss durch eines der Leuchtmittel unterbrochen oder kurzgeschlossen, was durch das Betriebsgerät erkennbar ist. Dies kann der Steuereinheit des Beleuchtungssystems über die Schnittstelle mitgeteilt werden, so dass das Beleuchtungssystem das Einstellen und Steuern des Beleuchtungsparameters zumindest einer anderen Leuchte oder weiterer Leuchtmittel der Leuchte im Beleuchtungssystem durchführen kann. Alternativ erfolgt die Meldung an eine Zentraleinheit des Beleuchtungssystems, welche wiederum die Steuereinheit entsprechend informiert.

In einer bevorzugten Ausgestaltung weist das Beleuchtungssystem zumindest ein passives Beleuchtungselement auf, welches mittels eines Steuersignals der Steuereinheit ansteuerbar ist. Als passives Beleuchtungselement ist beispielsweise eine Verdunklung, insbesondere in Form einer Jalousie oder eines Rollos vorgesehen, welche mittels eines ansteuerbaren Aktors derart variiert werden kann, dass die Veränderung der Beleuchtungsstärke eines Leuchtmittels kompensiert ist. Beispielsweise kann der Winkel von Lamellen eines Verdunklungssystems entsprechend durch die Steuereinheit eingestellt werden, sodass der Einfluss des Tageslichts auf den Gebäudeteil angepasst wird.

In einer bevorzugten Ausgestaltung passt die Steuereinheit die Steuersignale auf Basis eines veränderten Lichtparameters an. Als Lichtparameter wird insbesondere eine fotometrische Größe im Beleuchtungssystem verstanden. Dabei ist beispielsweise die Lichtstärke als Maß für den Lichtstrom in einem Raumwinkelbereich gemeint. Alternativ oder zusätzlich ist beispielsweise die Beleuchtungsstärke als Maß für das auftreffende Licht des Leuchtmittels auf einen definierten Ort des Gebäudeteils gemeint.

In einer bevorzugten Ausgestaltung weist das Beleuchtungssystem und/oder das Leuchtmittel ein Sensorelement auf, um den Lichtparameter zu erfassen. Somit kann einerseits die Veränderung eines Beleuchtungsparameters und/oder eines Lichtparameters im Beleuchtungssystem erkannt werden. Andererseits kann mit dem Sensorelement auch eine Überprüfung der durch die Steuereinheit bewirkten Kompensation durch Anpassung der Steuersignale erfolgen.

Somit kann beispielsweise innerhalb einer iterativen Vorgehensweise eine vollständige Kompensation eines ausgefallenen Leuchtmittels durch Anpassen der Steuersignale für benachbarte Leuchtmittel erfolgen. Alternativ kann auch ein Trial-and-Error-Einstellmechanismus gewählt werden. Das Sensorelement kommt ergänzend zum Einsatz, um zu überprüfen, ob die aufgrund der Lichtplanungsdaten vorausberechnete Kompensation die gewünschte Wirkung tatsächlich entfaltet.

Die Kompensations-Anpassung für das Leuchtmittel innerhalb des Beleuchtungssystems kann rein kalkulatorisch erfolgen oder durch eine interne Simulation geprüft werden.

In einer bevorzugten Ausgestaltung generiert das Leuchtmittel die Meldung, dass der Lichtparameter verändert ist. Dabei wird die Meldung an eine Zentraleinheit des Beleuchtungssystems übermittelt. Die Zentraleinheit ist beispielsweise eine Gebäudeverwaltungseinheit, in welcher alle Leuchtmittel-Ausfälle oder Leuchtmittel-Veränderungen gemeldet werden. Die Zentraleinheit generiert sodann eine Meldung an die Steuereinheit des Gebäudeteils, sodass die Steuersignale angepasst werden können. Somit wird der Ausfall oder die Alterung eines Leuchtmittels kompensiert, ohne dass sofort ein entsprechender Austausch des Leuchtmittels erfolgen muss.

In einer bevorzugten Ausgestaltung approximiert das Beleuchtungssystem anhand der Lichtplanungsinformation einen Lichtparameter. Anhand der Lichtplanungsinformation wird nun eine Berechnung durchgeführt. Dabei wird beispielsweise angenommen, dass eine Kompensation des Fehlers in der Leuchte nicht möglich oder unzureichend ist, um den gewünschten Beleuchtungsparameter einzustellen. Durch Zugriff auf die Lichtplanungsinformation werden die Leuchtmittel umliegender Leuchten dahingehend überprüft, ob durch eine Erhöhung deren Lichtstroms die mangelnde Kompensation der fehlerhaften Leuchte oder des fehlerhaften Leuchtmittels ausgeglichen werden kann. Hier wird beispielsweise eine Alterungskennlinie des Leuchtmittels ausgewertet. Anhand dieser Alterungskennlinie wird festgestellt, ob ein Leuchtmittel aufgrund seiner Alterung ein geringeres Maß an Lichtstärke emittiert. Sodann passt das Beleuchtungssystem das Steuersignal an die Alterungskennlinie an und kompensiert so diese Alterung.

In einer bevorzugten Ausgestaltung wird eine Änderung eines Lichtparameters eines Leuchtmittels durch eine Anpassung eines Steuerparameters von zumindest einem, zu dem Leuchten benachbarten Leuchte kompensiert werden. Ist beispielsweise die Leuchte zentral innerhalb einer Leuchtengruppe angeordnet, so kann durch angepasste Steuersignale der benachbarten Leuchten eine entsprechende Lichtstärke der benachbarten Leuchten geändert werden, um einen Ausfall dieser Leuchte zu kompensieren. Falls die Kompensation nur in einem unzureichenden Maß ausgeführt werden kann, also der Abstand zwischen der ausgehend von der Lichtplanungsinformation errechneten Sollwerten und der tatsächlich durch die Kompensation Erreichte Beleuchtungssituation, kann eine Fehlermeldung seitens des Beleuchtungssystems optisch, akustisch oder durch Ausgabe von Signalen über eine drahtlose oder drahtgebundene Schnittstelle ausgegeben werden.

Die Kompensation kann insbesondere durch eine Änderung der Lichtstärke der Leuchte oder benachbarter Leuchten und/oder Änderung der Abstrahlcharakteristik und/oder der Änderung der Hauptabstrahlrichtung und/oder des Schaltens unterschiedlicher Leuchten und/oder durch Zuschalten von weiteren Leuchtmitteln innerhalb einer Leuchte aus einer Notbeleuchtungseinheit und/oder durch Änderung der Farbe erfolgen.

Die vorab erzeugten Lichtplanungsinformationen werden nicht nur unverändert genutzt, um Korrekturmaßnahmen einzuleiten. Zudem ist es möglich, ausgehend von Ereignissen während der Betriebsphase des Beleuchtungssystems und den vorhandenen Lichtplanungsinformationen sowie einem Beleuchtungsplan, in welchem die Leuchte mit ihren Eigenschaften und ihrem Standort verzeichnet ist, zunächst theoretisch Korrekturmaßnahmen zu ermitteln und in einer aktualisierten - die Ereignisse berücksichtigenden - erneuten Lichtplanung auf ihrer Wirksamkeit hin vorausberechnen. Dabei wird zunächst in dem Beleuchtungssystem keine tatsächliche Veränderung vorgenommen, sondern lediglich die Wirksamkeit der Änderungen simuliert, ohne dass in dem Beleuchtungssystem tatsächlich etwas verändert wird. Wenn die Simulation ergibt, dass eine Kompensation möglich ist, wird diese simulierte Veränderung des Beleuchtungssystems in das Beleuchtungssystem übernommen und entsprechende Steuersignale werden generiert. Wenn die Simulation ergibt, dass die Kompensation nur unzureichend ist, oder mehr Schaden als Nutzen anrichtet, weil beispielsweise eine zu hohe Blendung in anderen Bereichen des Beleuchtungssystems erfolgt, wird die Simulation nicht übernommen und iterativ eine veränderte Simulation geprüft. Alternativ werden nur minimale Korrekturen am Beleuchtungssystem vorgenommen, aber die Priorität dieses Leuchtenfehlers entsprechend erhöht, um ein rasches Austauschen zu erwirken.

Somit können Veränderungen am Beleuchtungssystem vorgenommen werden, ohne dass diese für den Nutzer spürbar sind. Es kann ermittelt werden, ob ein Fehler kompensiert werden kann oder ob die Priorität für eine anstehende Wartung erhöht werden muss, weil keine Kompensation möglich ist.

Erfindungsgemäß umfasst die Leuchte ein LED-Modul mit einem Betriebsgerät, wobei das LED-Modul zumindest eine, bevorzugt eine Vielzahl von LEDs ansteuert.

In einer bevorzugten Ausgestaltung weist eine Leuchte eine Notbeleuchtungseinheit auf.

Erfindungsgemäß werden die Steuerparameter anhand einer vordefinierten Priorisierung angepasst. Diese vordefinierte Priorisierung kann beispielsweise an dem konkreten Ort des Gebäudeteils festgemacht werden. Somit ist eine Kompensation eines Beleuchtungsparameters durch Anpassen von Steuersignalen im Beleuchtungssystem eines Fluchtwegs vorrangig vor der Kompensation eines Beleuchtungsparameters in einem Büro beziehungsweise vor der Kompensation eines Beleuchtungsparameters eines Flures, der kein Fluchtweg ist.

Alternativ kann eine Priorisierung auch auf Basis der Topologie eines Gebäudeteils erfolgen. Wird beispielsweise festgestellt, dass eine Leuchte innerhalb eines geschlossenen Büros ausfällt, so kann eine Kompensation auf Basis einer Leuchte auf dem Flur nicht erfolgen, da die Flur-Leuchte die Beleuchtungssituation im abgeschlossenen Büro nicht beeinflussen kann. Ist hingegen ein lichtoffenes Großraumbüro mit einer Leuchte ausgestattet, welche nicht bestimmungsgemäß funktioniert, so können benachbarte Leuchten auch aus beispielsweise alternativen Beleuchtungssubsystemen zur Kompensation verwendet werden.

Somit ist die Steuereinheit vorgesehen, das Steuersignal einer Leuchte eines ersten Beleuchtungssubsystems anzupassen, um einen Beleuchtungsparameter bzw. einen Lichtparameter einer Leuchte eines zweiten Beleuchtungssubsystems zu kompensieren. Als Beleuchtungssubsysteme können beispielsweise ein Flur und/oder ein gebäudetechnisch abgetrenntes Büro und/oder ein Großraumbüro des Gebäudeteils oder benachbarten Gebäudeteilen gemeint sein.

Als Beispiel ist ein Betriebsgerät für eine Leuchte innerhalb eines Beleuchtungssystems der vorhergehenden Art vorgeschlagen. Das Betriebsgerät weist einen Spannungsumsetzer, einen Schaltregler, und eine Kontrolleinheit auf, wobei die Kontrolleinheit eine Schnittstelle aufweist. Die Schnittstelle ist dazu eingerichtet ein elektrisches Steuersignal von einer Steuereinheit des Beleuchtungssystems zu empfangen. Das Steuersignal ist auf Basis der Lichtplanungsinformation angepasst, um einen Beleuchtungsparameter eines an das Betriebsgerät angeschlossenen Leuchtmittels anzupassen, wenn eine Meldung, vorzugsweise von einem der Leuchten des Beleuchtungssystems, generiert wurde, dass zumindest ein Lichtparameter als Beleuchtungsparameter des Beleuchtungssystems verändert ist. Die Anpassung erfolgt, um eine Kompensation eines Beleuchtungsparameters der Leuchte zu erwirken.

In einer bevorzugten Ausgestaltung weist das Betriebsgerät einen Energiespeicher auf, um im Falle eines Spannungsausfalls im Gebäudeteil die Leuchte mit Energie versorgen zu können. Derartige Betriebsgeräte werden auch als Notfallbetriebsgeräte zur Notbeleuchtung innerhalb eines Gebäudes vorgesehen.

Als Beispiel ist ein Verfahren zum Betreiben eines Beleuchtungssystems der vorhergehenden Art vorgesehen. Das Verfahren umfasst die Verfahrensschritte: Übertragen eines Steuersignals zwischen einer Leuchte und einer Steuereinheit; Zugreifen auf zumindest eine Lichtplanungsinformation aus einer Lichtplanungsphase des Beleuchtungssystems; und Anpassen des Steuersignals durch die Steuereinheit auf Basis der Lichtplanungsinformation, wenn eine Meldung, vorzugsweise von einem der Leuchtmittel des Beleuchtungssystems, generiert wurde, dass zumindest ein Lichtparameter als Beleuchtungsparameter des Beleuchtungssystems verändert ist.

Nachfolgend wird anhand von Figuren die Erfindung bzw. weitere Ausführungsformen und Vorteile der Erfindung näher erläutert, wobei die Figuren lediglich Ausführungsbeispiele der Erfindung beschreiben. Gleiche Bestandteile in den Figuren werden mit gleichen Bezugszeichen versehen. Die Figuren sind nicht als maßstabsgetreu anzusehen, es können einzelne Elemente der Figuren übertrieben groß bzw. übertrieben vereinfacht dargestellt sein.

Es zeigen:
- Fig. 1: ein erstes Ausführungsbeispiel eines erfindungsgemäßen Beleuchtungssystems.
- Fig. 2: das erfindungsgemäße Beleuchtungssystem gemäß Fig. 1 mit angepasstem Steuersignal.
- Fig. 3: ein zweites Ausführungsbeispiel eines erfindungsgemäßen Beleuchtungssystems.
- Fig. 4: ein drittes Ausführungsbeispiel eines erfindungsgemäßen Beleuchtungssystems.
- Fig. 5: ein Betriebsgerät zum Betreiben eines Leuchtmittels innerhalb eines erfindungsgemäßen Beleuchtungssystems.

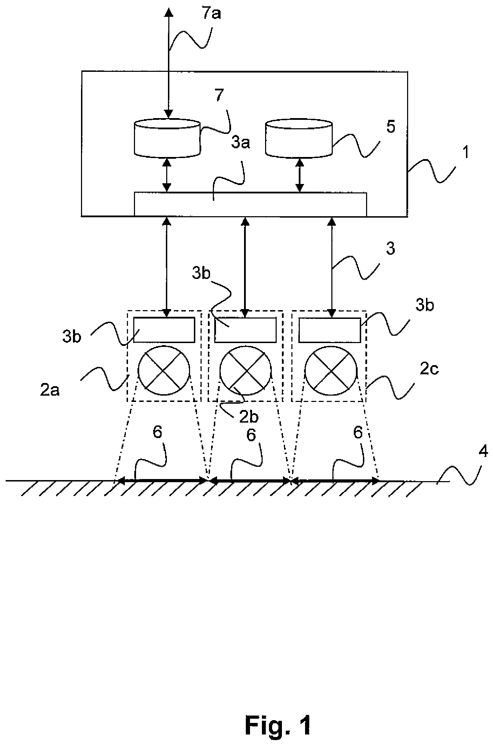

Fig. 1 zeigt ein erstes Ausführungsbeispiel eines Beleuchtungssystems. Dabei ist eine Steuereinheit 1 vorgesehen. Die Steuereinheit 1 weist eine Schnittstelle 3 zwischen der Steuereinheit 1 und an die Steuereinheit angeschlossenen Leuchten 2a, 2b, 2c auf. Gemäß Fig. 1 sind drei Leuchten 2a, 2b, 2c vorgesehen. Die Anzahl der Leuchten 2, die an die Steuereinheit 1 angeschlossen sind, ist nicht erfindungsrelevant. Jede der Leuchten 2, kann wiederum eine Mehrzahl von Leuchtmitteln, beispielsweise in Form von LED, aufweisen. Insbesondere können weitere Leuchten 2 an die Steuereinheit 1 angeschlossen sein. Überdies können die Leuchten 2 selbst auch über eine Mehrzahl von Leuchten 2 oder Leuchtmittel verfügen, die über ein Betriebsgerät 11 mit der Steuereinheit 1 kommunizieren. Beispielsweise stellt jede Leuchte 2 eine LED-Strecke aus mehreren LEDs dar. Die einzelnen Leuchtmittel können dabei ein Mischlicht, beispielsweise ein Weißlicht, oder Licht einer bevorzugten Wellenlänge, beispielsweise ein rotes Licht, ein blaues Licht oder ein grünes Licht erzeugen.

Steuereinheitsseitig ist eine Schnittstelleneinheit 3a vorgesehen. Diese Steuereinheit 3a ist mit einem elektronischen Speicher verbunden, der Steuerinformationen 5 zum Betreiben des Beleuchtungssystems aufweist. Der Speicher ist als nichtflüchtiger Speicher, beispielsweise als EEPROM oder Flash-Speicher ausgebildet. Zusätzlich ist die Schnittstelleneinheit 3a mit einem zweiten Speicher verbunden, in welchen Lichtplanungsinformationen 7 abgelegt sind. Der zweite Speicher ist als nichtflüchtiger Speicher, beispielsweise als EEPROM oder Flash-Speicher ausgebildet. Die Lichtplanungsinformationen 7 sind während einer Lichtplanungsphase des Beleuchtungssystems ermittelt bzw. errechnet worden und bevorzugt über eine Schnittstelle 7a an die Steuereinheit 1 übertragen worden. Diese Lichtplanungsinformationen 7 sind beispielsweise mit einem Lichtplanungsprogramm für Beleuchtungssysteme erstellt worden. Eine Übertragung an das Beleuchtungssystem erfolgt dabei beispielsweise mittels eines PCs oder eines Steuergeräts. Weiterhin kann die Übertragung über die Schnittstelle 7a drahtgebunden oder drahtlos erfolgt sein. Nach dem Erhalt der Lichtplanungsinformation 7 ist diese Schnittstelle 7a deaktiviert. Auf Basis der Lichtplanungsinformation 7 werden die Leuchtenanzahl, der relative Abstand zwischen den Leuchten, deren Dimmverhalten und/oder die Leuchtdauer bestimmt. Überdies können lichtumlenkende Elemente der Leuchten 2, beispielsweise eine Reflektoreinstellung, eine Diffusoreinstellung und der gleichen bestimmt werden. Die Lichtplanungsinformation 7 ist statisch und mit Abschluss der ursprünglichen Beleuchtungssystem-Planung festgeschrieben.

Das Beleuchtungssystem gemäß Fig. 1 wird nun mittels der Steuerinformation 5 betrieben. Dazu sendet die Schnittstelleneinheit 3a Steuersignale über die Schnittstelle 3 an eine leuchtenseitige Schnittstelleneinheit 3b der jeweiligen Leuchte 2a, 2b, 2c. Auf Basis der Steuersignale wird die Leuchte 2 a, 2b, 2c mit Steuerparametern 6 versorgt. Als Steuerparameter 6 sind gemäß Fig. 1 beispielsweise ein lichtumlenkender Parameter, wie Abstrahlwinkel bzw. eine Abstrahlcharakteristik dargestellt. Zusätzlich oder alternative Steuerparameter 6 sind beispielsweise der Lichtstrom, eine Mindestbeleuchtungsstärke des Gebäudeteils 4, eine Arbeits-Beleuchtungsstärke, eine Hauptabstrahlrichtung und/oder eine Farbinformation mittels des Steuersignals übertragbar.

Auf Basis der Steuerparameter 6 wird der Gebäudeteil 4 entsprechend einer während einer Lichtplanungsphase erarbeiteten Lichtplanungsinformation 7 ausgeleuchtet. Somit stellt die Steuereinheit 1 die Beleuchtungsparameter des Leuchtmittels 2 ein. Dabei wird beispielsweise die Beleuchtungsstärke anhand des Gebäudeteils 4 angepasst. Auch kann der Einfluss von Tageslicht und die Ausgestaltung von Fensterpartien berücksichtigt werden.

In Fig. 1 ist gemäß der Steuerinformation 5 der Abstrahlwinkel der Leuchten 2 als Steuerparameter 6 derart eingestellt, dass eine homogene Beleuchtung der Fläche des Gebäudeteils 4 durch die drei Leuchten 2a, 2b, 2c erfolgt. Somit weisen alle drei Leuchten 2a, 2b, 2c den gleichen Lichtkegel auf, um den Gebäudeteil 4 gleichmäßig auszuleuchten. Der Gebäudeteil 4 ist beispielsweise eine Arbeitsfläche in einem Büro innerhalb eines Gebäudes.

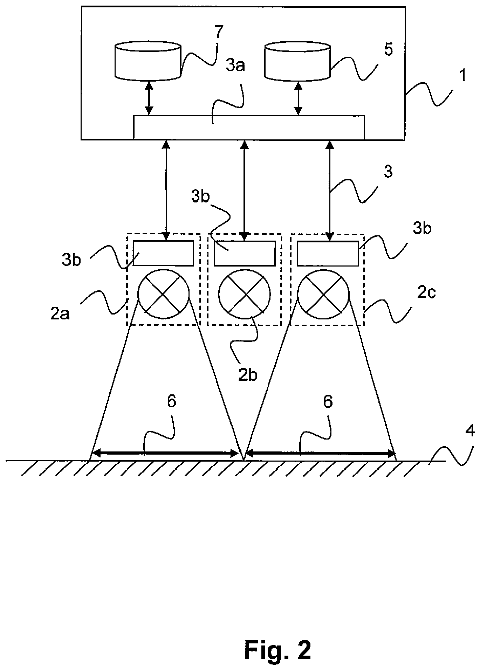

In Fig. 2 ist dargestellt, wie ein Ausfall der mittleren Leuchte 2b der drei gezeigten Leuchten 2a, 2b, 2c kompensiert wird. Dabei erhält die Steuereinheit 1 die Information über den Ausfall der mittleren Leuchte 2b mittels der Schnittstelleneinheit 3b. Die Information wird in Form einer Meldung in der Steuereinheit 1 empfangen. Diese Meldung wird entweder von der Leuchte 2b selbst generiert oder als Ausgangssignal eines zusätzlichen Sensorelements (nicht dargestellt) bereitgestellt. Das zusätzliche Sensorelement kann dabei Teil einer Leuchte 2a, 2b, 2c oder eines Betriebsgeräts für Leuchten 2 oder Teil der Steuereinheit 1 sein. Die Meldung kann alternativ oder zusätzlich auch von einer Zentraleinheit (nicht dargestellt), beispielsweise einer Gebäudeverwaltungseinrichtung bereitgestellt werden, an die die Meldung über veränderte Lichtparameter erfolgt ist.

Beispielsweise weist die mittlere Leuchte 2b ein Erkennungsmittel auf (nicht dargestellt), um die Änderung des Lichtparameters, beispielsweise verursacht durch den Ausfall der mittleren Leuchte 2b, an die Steuereinheit 1 zu berichten. Sodann greift die Steuereinheit 1 auf eine Lichtplanungsinformation 7 innerhalb des zweiten Speichers zu. Auf Basis der Lichtplanungsinformation 7 erfährt die Steuereinheit 1, dass der Gebäudeteil 4 ein Büro ist und eine Arbeitsfläche des Büros homogen ausgeleuchtet werden muss. Darüber hinaus werden die Anzahl der benachbarten Leuchten 2a, 2c und deren relativer Abstand untereinander und zu anderen Gebäudeteilen sowie Parameter, insbesondere Leuchtkraft, Alterung, Wellenlänge, über die jeweilig verbaute Leuchte 2 selbst erhalten.

Aufgrund des Ausfalls der mittleren Leuchte 2b würde ein sogenannter Dark-Spot entstehen, der eine inhomogene Ausleuchtung bei gleichbleibendem Betrieb des Beleuchtungssystems des Gebäudeteils 4 bedeuten würde. Auf Basis der Lichtplanungsinformation 7 werden nun die Steuerparameter 6 der benachbarten linken Leuchte 2a und der benachbarten rechten Leuchte 2c angepasst. Dazu werden die Steuersignale der Schnittstelle 3 mit entsprechenden Steuerparametern 6 gesendet. Gemäß Fig. 2 wird der Abstrahlwinkel der linken Leuchte 2a und der rechten Leuchte 2c aufgeweitet. Dies erfolgt beispielsweise durch die entsprechende Ansteuerung von elektrischen Aktoren. Somit kann der Ausfall der Leuchte 2b vollständig kompensiert werden.

Alternativ und in Fig. 2 nicht gezeigt, kann auch die Hauptabstrahlrichtung der übrigen Leuchten 2a, 2c derart angepasst werden, dass der Dark-Spot verkleinert oder bestenfalls komplett entfernt wird. Dazu werden Richtungsaktoren entsprechend angesteuert.

Alternativ und in Fig. 2 nicht gezeigt, kann auch der Lichtstrom der übrigen Leuchten 2a, 2c derart angepasst werden, dass der Dark-Spot verkleinert oder bestenfalls komplett entfernt wird. Dazu wird ein Dimmverhalten der Leuchten 2a, 2c verändert.

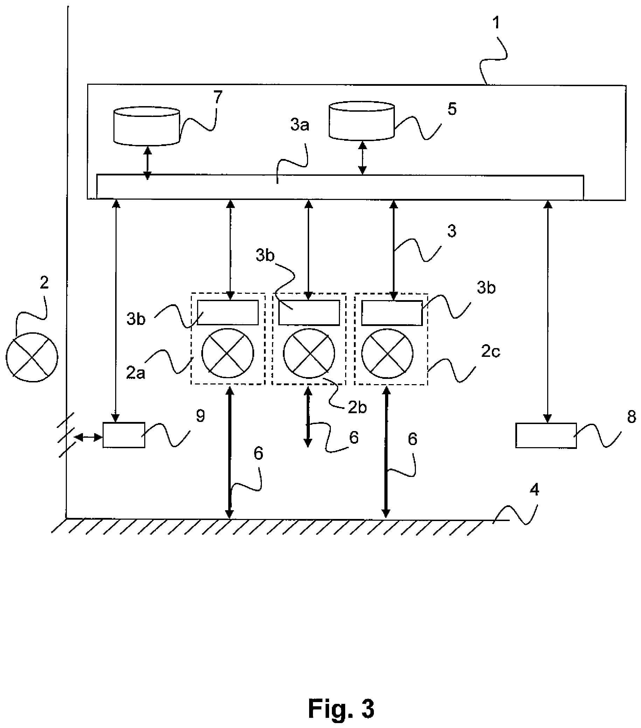

Alternativ ist der Gebäudeteil 4 ein Flur. Die Lichtplanungsinformation 7 beinhaltet daher eine entsprechende Forderung, dass der Flur lediglich eine Mindestbeleuchtungsstärke aufweisen muss, da es sich ggf. um einen Fluchtweg handelt. Eine homogene Ausleuchtung ist dabei nicht gefordert. Somit muss nicht zwangsläufig die Abstrahlcharakteristik angepasst werden, sondern es genügt, wenn die benachbarten Leuchten 2a, 2c einen größeren Lichtstrom erzeugen. Dies wird sodann mittels entsprechender Steuersignale, ermöglicht, wodurch die Leuchten 2a, 2c eine längere An-Zeit eines PWM-Signals erfährt oder ein Dimmverhalten korrigiert wird. Die Steuersignale werden beispielsweise von einem Betriebsgerät umgesetzt. In Fig. 3 ist ein zweites Ausführungsbeispiel eines erfindungsgemäßen Beleuchtungssystems mit zu Fig. 1 bzw. Fig. 2 drei wesentlichen Unterschieden dargestellt. Diese drei Unterschiede sind unabhängig voneinander.

Der erste Unterschied zwischen Fig. 3 und Fig. 1 ist das Einbringen eines Sensorelements 8. Dieses Sensorelement 8 ermittelt einen aktuellen Lichtparameter, beispielsweise den Lichtstrom oder die Beleuchtungsstärke der Leuchten 2a, 2b, 2c. Auf diese Weise kann ein eingestellter Soll-Lichtparameter mit einem aktuellen Lichtparameter in der Steuereinheit 1 verglichen werden. Somit kann einerseits ein Rückführkanal für den eingestellten Steuerparameter 6 erhalten werden, welcher anzeigt, ob der Steuerparameter 6 eingehalten wird. Somit kann eine Meldung erfolgen, ob ein geforderter Lichtparameter verändert wurde. Andererseits kann der Rückführkanal zum Überprüfen der Kompensation durch die Steuereinheit 1 genutzt werden. Das Sensorelement 8 ist beispielsweise ein Beleuchtungsstärke-Messelement, um festzustellen, ob der Gebäudeteil 4 aufgrund des Ausfalls eines Leuchtmittels 2 aufgrund der angepassten Steuerinformationen über die Schnittstelle 3 an die Leuchtmittel 2 vollständig kompensiert werden konnte.

Die vorab erzeugten Lichtplanungsinformationen 7 des zweiten Speichers werden nicht nur unverändert genutzt, um Korrekturmaßnahmen einzuleiten. Zudem werden ausgehend von Ereignissen während der Betriebsphase des Beleuchtungssystems und den vorhandenen Lichtplanungsinformationen 7 sowie einem Beleuchtungsplan, in welchem die Leuchten 2a, 2b, 2c mit ihren Eigenschaften und ihrem Standort verzeichnet sind, zunächst theoretisch Korrekturmaßnahmen ermittelt und in einer aktualisierten - die Ereignisse berücksichtigenden - erneuten Lichtplanung auf ihrer Wirksamkeit hin vorausberechnen, also simuliert. Dabei wird zunächst in dem Beleuchtungssystem keine tatsächliche Veränderung vorgenommen, sondern lediglich die Wirksamkeit der Änderungen simuliert, ohne dass in dem Beleuchtungssystem tatsächlich etwas verändert wird. Wenn die Simulation ergibt, dass eine Kompensation möglich ist, wird diese simulierte Veränderung des Beleuchtungssystems in das Beleuchtungssystem übernommen und entsprechende Steuersignale werden generiert. Wenn die Simulation ergibt, dass die Kompensation nur unzureichend ist, oder mehr Schaden als Nutzen anrichtet, weil beispielsweise eine zu hohe Blendung in anderen Bereichen, beispielsweise im Lichtkegel der Leuchte 2a oder der Leuchte 2b des Beleuchtungssystems erfolgt, wird die Simulation nicht übernommen.

Diese Kompensationsmöglichkeit wird der Steuereinheit 1 mitgeteilt, um ggf. im Rahmen eines iterativen Prozesses bessere Kompensationen durchzuführen. Gegebenenfalls wird iterativ eine veränderte Simulation geprüft. Alternativ werden nur minimale Korrekturen am Beleuchtungssystem vorgenommen, aber die Priorität zum Beheben des Ausfalls der Leuchte 2b entsprechend erhöht, um ein rasches Austauschen zu erwirken.

In einem zweiten Unterschied zwischen Fig. 1 und Fig. 3 ist als Steuerparameter 6 nicht die Abstrahlcharakteristik der einzelnen Leuchtmittel 2 verwendet, sondern die Beleuchtungsstärke bzw. der Lichtstrom, hier dargestellt durch den Doppelpfeil ausgehend von den Leuchtmitteln 2. Die unterschiedliche Länge der Doppelpfeile zeigt an, dass die Leuchten 2a, 2b, 2c unterschiedliche Beleuchtungsstärken 6 aufweisen. Die mittlere Leuchte 2b weist eine im Vergleich zu den äußeren Leuchten 2a, 2c geringere Beleuchtungsstärke 6 auf. Diese verringerte Beleuchtungsstärke 6 für den Gebäudeteil 4 wird mittels des Sensorelements 8 aufgenommen. Veränderte Lichtparameter werden so an die Steuereinheit 1 gemeldet. Entsprechend werden die geänderten Lichtparameter mittels der Steuereinheit 1 durch Anpassung der Steuersignale kompensiert. Hierzu wird die Lichtplanungsinformation 7 aus einer Speichereinheit der Steuereinheit 1 verwendet. Eine derartige Lichtplanungsinformation 7 ist beispielsweise der relative Abstand zwischen den einzelnen Leuchten 2, die Beschaffenheit des Gebäudeteils 4, eine Absorptionsrate der Oberflächen des Gebäudeteils 4 oder eine Mindestbeleuchtungsstärke, die für diesen Gebäudeteil 4 gefordert ist.

Die verringerte Beleuchtungsstärke 6 der mittleren Leuchte 2b kann beispielsweise aufgrund einer Alterung von Leuchtmitteln erwirkt sein. Dabei kann beispielsweise ein Austausch von Leuchtmitteln bei den äußeren Leuchten 2a, 2c bereits erfolgt sein, wohingegen die Leuchtmittel der mittleren Leuchte 2b noch nicht ausgetauscht wurden. Die Steuerinformation 5 innerhalb der Steuereinheit 1 weist dazu auch Informationen über die Alterung der Leuchtmittel auf. Somit erfährt die Steuereinheit 1, dass die mittlere Leuchte 2b eine verringerte Beleuchtungsstärke 6 aufgrund des Alters aufweisen muss. Eine entsprechende Kompensation dieser Leuchte 2b durch veränderte Ansteuerung der äußeren Leuchten 2a, 2c durch die Steuereinheit 1 wird auf Basis der Lichtplanungsinformation 7 erfolgen. Somit ist sichergestellt, dass eine homogene Beleuchtung des Gebäudeteils 4 weiterhin gegeben ist. Alternative Beleuchtungsszenarien, beispielsweise eine farbliche Anpassung oder eine direkte bzw. indirekte Beleuchtung kann ebenfalls auf Basis der Lichtplanungsinformationen 7 erzeugt werden.

Gemäß einem dritten Unterschied zwischen der Fig. 1 und der Fig. 3 ist ein passives Beleuchtungselement 9 im Beleuchtungssystem vorgesehen. Hierbei ist das passive Beleuchtungselement 9 mit einem Aktor ausgestaltet, um weitere Veränderungen von Beleuchtungsparameter im Beleuchtungssystem vornehmen zu können. Beispielsweise steuert das passive Beleuchtungselement 9 eine Verdunklungseinheit im Gebäude. Als Verdunklungseinheit ist beispielsweise ein Rollo oder eine Jalousie eingebracht. Eine Leuchte 2 außerhalb des Gebäudeteils 4 kann aufgrund der Lamelleneinstellung der Verdunklungseinheit auf den Gebäudeteil 4 einwirken oder nicht. Die Leuchte 2 kann beispielsweise das Tageslicht repräsentieren. Eine Winkeleinstellung von Lamellen der Verdunklungseinheit kann nunmehr die Abschwächung der mittleren Leuchte 2b kompensieren.

Erfindungsgemäß werden die Lichtplanungsinformationen 7 genutzt bzw. erfolgt eine neue Neuberechnung der Beleuchtungsparameter nun auch während des Betriebs des Beleuchtungssystems auf Basis der ermittelten aktuellen Beleuchtungssituation.

Auf diese Weise kann eine Kompensation einer Leuchte 2 erfolgen. Beispielsweise wird eine homogene Beleuchtungsstärke von größeren Flächen eines Gebäudeteils 4 durch mehrere Leuchten 2 erwirkt. Bei Ausfall oder starker Verdunklung der Leuchte 2b entsteht ein sogenannter Dark-Spot. Das Beleuchtungssystem ist durch die Steuereinheit 1 eingerichtet, eine reduzierte Beleuchtungsstärke zu berechnen und/oder zu ermitteln, ob und mit welcher weiteren Leuchte 2a, 2c in räumlicher Nachbarschaft der Beleuchtungsstärkeabfall kompensiert werden kann. Die dazu benötigte Information wird aus der Lichtplanungsinformation 7 gewonnen, auf die die Steuereinheit 1 zugreifen kann. Die Kompensation erfolgt dabei beispielsweise für Leuchten-Steuergruppen, die dem Beleuchtungssystem bereits bekannt sind oder zusätzlich auch Leuchten-Steuergruppen, die in räumlicher Nachbarschaft, jedoch in einem anderen Beleuchtungssubsystem 10 angeordnet sind.

Weiterhin kann neben der Kompensation der Leuchte 2b auch ein Leuchtmittelaustausch mit einer Dringlichkeitsinformation versehen werden. Somit kann eine Priorität vordefiniert werden, mit welcher die Leuchte 2b zu kompensieren ist. Ist beispielsweise eine weitere Leuchte 2a, 2c innerhalb des Beleuchtungssystems ausgefallen, so kann auf Basis der vordefinierten Priorität eine Auswahl darüber getroffen werden, welche der Leuchten 2 bevorzugt kompensiert werden soll und welche nicht. Ist beispielsweise eine Leuchte 2 innerhalb eines Fluchtweges ausgefallen, so könnte die Priorität für die Kompensation dieser Leuchte 2 höher sein als die Kompensation einer Leuchte 2 innerhalb eines Großraumbüros. Überdies kann auch eine Information darüber generiert werden, welche und wie viele Ausfälle noch erfolgen könnten, bevor die Kompensation unwirksam wird.

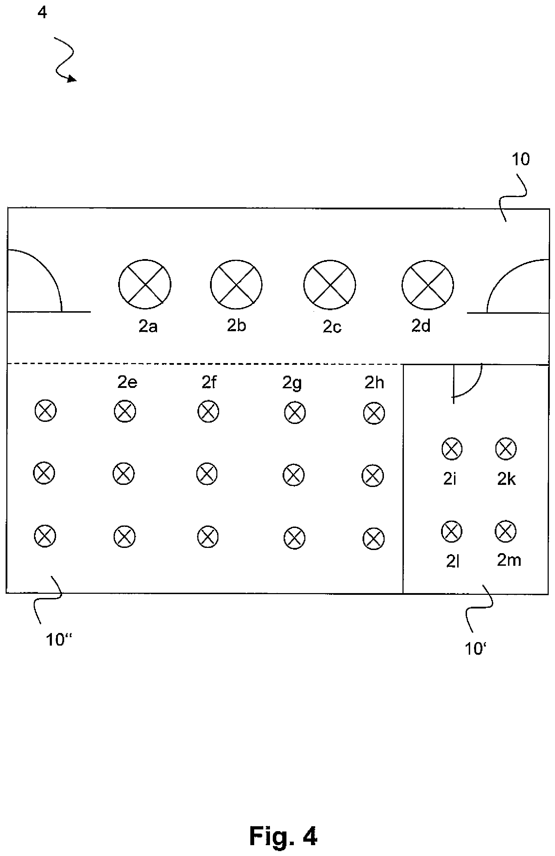

In Fig. 4 ist ein drittes Ausführungsbeispiel eines erfindungsgemäßen Beleuchtungssystems dargestellt. Hierbei ist ein Gebäudeteil 4 in einer Draufsicht gezeigt. Dabei ist das Gebäudeteil 4 in drei Beleuchtungssubsysteme 10, 10' und 10" unterteilt. Das Beleuchtungssubsystem 10 betrifft dabei einen Flur, welcher mittels der Leuchten 2a, 2b, 2c und 2d dauerhaft beleuchtet wird, um beispielsweise einer Fluchtweg-Anforderung zu genügen. Das Beleuchtungssubsystem 10' betrifft ein abgeschlossenes Büro, welches mit vier Leuchten 2i, 2k, 2l und 2m beleuchtet wird. Überdies ist gemäß Fig. 4 im Gebäudeteil 4 ein Beleuchtungssubsystem 10" dargestellt, welches mit einer Vielzahl von Leuchten 2 beleuchtet wird, wobei stellvertretend die Leuchten 2e, 2f, 2g und 2h gekennzeichnet sind. Zwischen dem Flur 10 und dem Großraumbüro 10" ist eine lichtdurchlässige Wand angeordnet, hier als Strichlinie dargestellt. Dementgegen ist das Büro 10' mit lichtundurchlässigen Wänden ausgestattet.

Nachfolgend werden zwei unterschiedliche Szenarien für verschiedene Ausfälle von Leuchten 2 innerhalb der einzelnen Beleuchtungssubsysteme 10, 10' und 10" des Gebäudeteils 4 beschrieben.

Fällt beispielsweise die Leuchte 2c aus, so kann auf Basis der Lichtplanungsinformation 7 innerhalb der Steuereinheit 1 erkannt werden, dass im Beleuchtungssubsystem 10" Leuchten 2g und 2h zur Verfügung stehen, welche den Ausfall der Leuchte 2c aufgrund der lichtdurchlässigen Wand kompensieren können, was durch die Lichtplanungsinformation 7 bekannt ist.

Es ist zudem möglich, dass die Eignung der Leuchten 2g, 2h erst nach einer erneuten Simulation der Beleuchtung mit der veränderten Beleuchtungssituation - Leuchte 2c ausgefallen, die Leuchten 2g, 2h sind möglicherweise deren Kompensation - beurteilt werden kann.

Der Aufwand der entstehen würde, wenn die Auswirkungen eines Ausfalls/ Teilausfalls für jeden einzelnen Lichtpunkt bzw. deren Kombinationen im Vorfeld berechnet würden, ist als ziemlich hoch einzuschätzen, sodass eine Berechnung auf Basis der tatsächlichen Beleuchtungssituation vorteilhaft ist.

Wird festgestellt, dass die Leuchten 2g und 2h ungeeignet sind, um den Ausfall der Leuchte 2c zu kompensieren, da beispielsweise eine Notlichtfunktion gefordert ist oder die Lichtleistung der Leuchten 2g und 2h derart hoch sein müsste, dass die Arbeitsplätze unterhalb der Leuchten 2g, 2h zu stark ausgeleuchtet werden, so kann diese Simulation auch verworfen werden und iterativ eine andere Kompensationsmaßnahme getroffen werden.

Es könnten auch die Leuchten 2b und 2d zur Kompensation der ausgefallenen Leuchte 2c verwendet werden. Auf diese Weise können beispielsweise die Leuchten 2b und 2d derart angesteuert werden, dass diese einen höheren Lichtstrom produzieren. Überdies können auch die Leuchten 2g und 2h derart angesteuert werden, dass diese einen nur minimal höheren Lichtstrom produzieren.

Somit kann der Flur als Beleuchtungssubsystem 10 im Gebäudeteil 4 auch bei Ausfall einer Leuchte 2c vollständig beleuchtet werden und erfüllt weiterhin die Erfordernisse eines Fluchtwegs. Zudem kann der Ausfall der Leuchte 2c an das Beleuchtungssystem übermittelt werden, so dass ein Gebäudeverwaltungssystem den Austausch der defekten Leuchte 2c veranlasst. In diesem Szenario könnten theoretisch auch die Leuchten 2i und 2k des Beleuchtungssubsystems 10' zur Kompensation der Leuchte 2c verwendet werden. Aufgrund der Lichtplanungsinformationen 7 erfährt die Steuereinheit 1 jedoch, dass die Leuchte 2i und 2k in einem Büro angeordnet sind, welches nicht lichtdurchlässig mit dem Flur 10 verbunden ist. Somit können die Leuchten 2i und 2k nicht zur Kompensation der Leuchte 2c dienen.

Nachfolgend wird ein alternatives Szenario bezüglich der Dringlichkeit bei Ausfall einer Leuchte 2 näher beschrieben. Hierbei wird nicht darauf geachtet, dass der Flur 10 als Gebäudeteil 4 ein Fluchtweg ist. Fällt beispielsweise im Beleuchtungssubsystem 10' die Leuchte 2k und die Leuchte 2l aus, so erfährt die Steuereinheit 1 auf Basis der Lichtplanungsinformation 7, dass eine Kompensation dieser Leuchten 2k, 2l nicht möglich ist, da diese Leuchten 2k, 2l in einem abgeschlossenen Gebäudeteil 4 angeordnet sind. Somit wird eine Information an ein Gebäudemanagementsystem generiert, welches darstellt, dass ein Austausch der Leuchten 2k, 2l im Beleuchtungssubsystem 10' nicht kompensiert werden kann und ein Ersatz der defekten Leuchte 2 zeitnah erfolgen muss, um eine geforderte Beleuchtung zu erwirken. Zwischenzeitlich wird eine Kompensation mittels der Leuchten 2i und 2m erwirkt. Fällt zeitgleich mit dem Ausfall der Leuchten 2l und 2k auch eine Leuchte 2b oder 2c aus, so wird die Dringlichkeit zum Austausch nicht auf das Beleuchtungssubsystem 10 umgeleitet, da die Leuchte 2b und 2c durch die Leuchte 2a, 2d, 2e, 2f, 2g und 2h hinreichend kompensiert werden können.

Die Kompensation kann nun ausschließlich auf Ergebnissen der Lichtplanung erfolgen. Die Lichtplanungsinformation 7 wird somit der Steuereinheit 1 bereitgestellt, so dass die Steuereinheit 1 basierend auf dieser Lichtplanungsinformation 7 eine Kompensation ermöglichen kann. Im Rahmen eines iterativen Prozesses können mehrere Kompensationsmöglichkeiten geprüft werden, um die für die vorliegende neue Beleuchtungssituation geeignetste Maßnahme zu finden.

Alternativ oder zusätzlich können Sensorelemente 8 im Beleuchtungssystem angeordnet sein, um eine Überprüfung der vorausberechneten Kompensation durchzuführen. Somit kann festgestellt werden, ob die vorausberechnete Kompensation wirksam ist, um den veränderten Lichtparameter zu kompensieren. Alternativ kann auch im Rahmen einer Trial-&-Error Ansteuerung eine erste Kompensationsvariante durch eine andere Kompensationsvariante ersetzt werden.

Beleuchtungsparameter sind neben Parametern der Leuchtmittel, beispielsweise der Beleuchtungsstärke und des Lichtstroms auch die Lichtumlenkparameter, wie der Abstrahlwinkel der jeweiligen Leuchte 2. So kann beispielsweise die Verwendung einer Leuchte 2 als Spot-Licht für eine Akzentuierung während eines Normalbetriebs im Beleuchtungssystem nunmehr zu einem weitwinkligen Abstrahler angepasst werden, um im Kompensationsbetrieb eine Leuchte 2c zu kompensieren. Weiterhin kann auch das Verhältnis aus direkter und indirekter Beleuchtung gewechselt werden, wobei hauptsächlich die Hauptabstrahlrichtung verändert wird. Zusätzlich kann auch eine Jalousie oder eine Verdunklung, beispielsweise durch Veränderung von Lamellenwinkeln, zur Maximierung des Tageslicht-Einflusses verwendet werden.

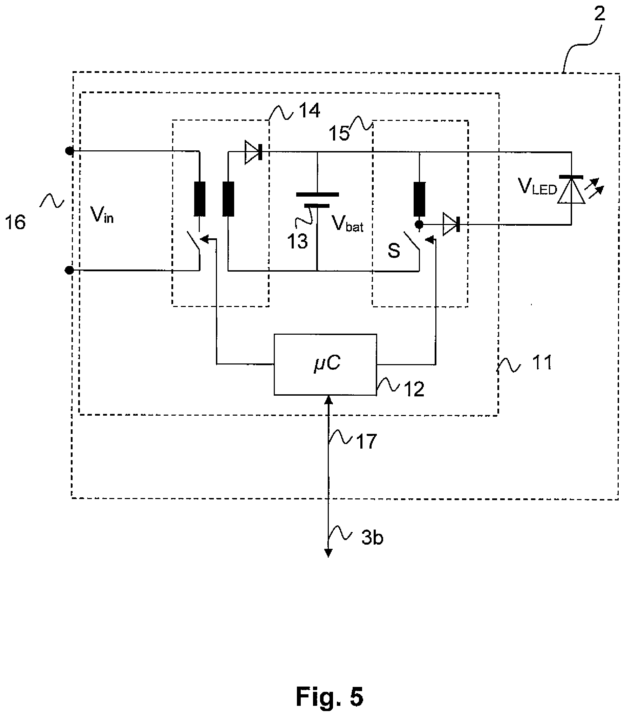

In Fig. 5 ist in Zusammenhang mit dem erfindungsgemäßen Beleuchtungssystem ein Betriebsgerät 11 für eine Leuchte 2 dargestellt. Das Betriebsgerät 11 wird mit einer Versorgungsspannung 16 versorgt. Die Versorgungsspannung 16 kann von der Steuereinheit 1 des Beleuchtungssystems generiert sein, oder alternativ eine Netzversorgungsspannung sein. Diese Netzversorgungsspannung 16 wird mittels einer Umsetzeinheit 14 in eine Betriebsspannung des Betriebsgeräts 11 umgesetzt. Dazu kann beispielsweise ein Transformator vorgesehen sein. Ein Schaltregler 15 ist vorgesehen, um ein Leuchtmittel der Leuchte 2 zu betreiben. Dazu wird der Schaltregler 15 mit einer Kontrolleinheit 12 betrieben. Ein Schaltelement S innerhalb des Schaltreglers 15 wird dabei abwechselnd aktiviert oder deaktiviert. Dies erfolgt im Rahmen einer PWM-Ansteuerung, um beispielsweise ein Dimmen des Leuchtmittels oder ein Reduzieren des Lichtstroms des Leuchtmittels zu erwirken. Das Betriebsgerät 11 weist zudem eine Kontrolleinheit 12 auf, welche mittels des Steuersignals 17 von der Steuereinheit 1 betrieben wird. Das Steuersignal 17 weist die Steuerparameter 6 auf, um die Leuchte 2 entsprechend zu betreiben.

Das Leuchtmittel gemäß Fig. 5 ist als eine Leuchtdiode dargestellt. Alternativ oder zusätzlich kann eine Vielzahl von Leuchtdioden in Reihe oder parallel angeordnet sein. Das Betriebsgerät 11 kann zudem lediglich eine LED oder eine Mehrzahl von LED-Strecken unabhängig voneinander ansteuern (nicht dargestellt).

Weiterhin weist das Betriebsgerät 11 eine Batterie als Energiespeicher 13 auf. Somit ist das Betriebsgerät 11 als Notfallbetriebsgerät zur Notfallbeleuchtung von Gebäudeteilen 4 eingerichtet. Der Wegfall einer Versorgungsspannung 16 wird in der Kontrolleinheit 12 erkannt und entsprechend wird die Ansteuerung an das Leuchtmittel 2 angepasst. Beispielsweise kann somit auch von einem Dimmbetrieb auf einen Betrieb mit einer vollen Beleuchtungsstärke umgeschaltet werden.

Fällt eine benachbarte Leuchte 2 aus, so kann zur Kompensation dieser Leuchte 2 auch ein - lediglich zur Notbeleuchtung vorgesehenes - Leuchtmittel der Leuchte 2 durch die Steuereinheit aktiviert werden.

Erfindungsgemäß wird auf eine Lichtplanungsinformation 7 zurückgegriffen, um eine Kompensation von Leuchten 2 innerhalb eines Beleuchtungssystems zu ermöglichen.

Dabei erfährt die Steuereinheit 1 oder eine Zentraleinheit des Beleuchtungssystems mittels einer Meldung, dass sich Lichtparameter verändert haben. Diese Meldung wird durch ein Sensorelement generiert. Das Sensorelement ist Teil der Leuchte 2 oder Teil des Beleuchtungssystems. Alternativ oder zusätzlich ist das Sensorelement eine eigenständige Einheit in dem Beleuchtungssystem.

Alternativ oder zusätzlich sind mehrere Sensorelemente in dem Beleuchtungssystem vorgesehen. So meldet ein erstes Sensorelement die sich verändernden Lichtparameter, wohingegen ein weiteres Sensorelement die Kompensation erfasst.

Durch das Sensorelement werden insbesondere der Defekt einer Leuchte 2 oder die Alterung von einzelnen Leuchtmitteln in einer oder mehreren Leuchten 2 im Beleuchtungssystem erfasst und entsprechend gemeldet. Die sich dadurch verändernden Lichtparameter werden durch Einstellen der Steuerparameter in dem Steuersignal von der Steuereinheit kompensiert.

### Bezugszeichenliste

- 1: Steuereinheit
- 2: Leuchte
- 3: Schnittstelle zwischen Leuchtmittel und Steuereinheit
- 3a: steuereinheitseitige Schnittstelleneinheit
- 3b: leuchtenseitige Schnittstelleneinheit
- 4: Gebäudeteil
- 5: Steuerinformationen
- 6: Steuerparameter
- 7: Lichtplanungsinformation
- 7a: Schnittstelle zu Lichtplanungsprogram
- 8: Sensoreinheit
- 9: Aktor eines passiven Beleuchtungselements
- 10: Beleuchtungssubsystem
- 11: Betriebsgerät
- 12: Kontrolleinheit
- 13: Energiespeicher
- 14: Umsetzeinheit
- 15: Schaltregler
- 16: Versorgungsspannung
- 17: Steuersignal

## Patentansprüche

1. Beleuchtungssystem umfassend:
- mehrere Leuchten (2), welche zum Beleuchten eines Gebäudeteils (4) ausgebildet sind,
- eine Steuereinheit (1), eingerichtet zum Einstellen und Steuern jeweils eines Beleuchtungsparameters der Leuchten (2),
- eine Schnittstelle (3), eingerichtet zum Übertragen elektrischer Steuersignale zwischen den Leuchten (2) und der Steuereinheit (1), wobei die Steuersignale jeweils zumindest einen Steuerparameter (6) beinhalten, wobei mittels des Steuerparameters (6) die Leuchten (2) individuell zur Beleuchtung des Gebäudeteils (4) ansteuerbar sind,
- einen Speicher, in dem zumindest eine Lichtplanungsinformation (7) des Beleuchtungssystems abgelegt ist, wobei die Lichtplanungsinformation (7) Soll-Beleuchtungsstärken an definierten Positionen in dem Gebäudeteil, die von dem Beleuchtungssystem beleuchtet werden, umfasst, und
- ein Sensorelement (8), das dazu eingerichtet ist, eine Veränderung eines Lichtparameters des Beleuchtungssystems zu erfassen, und eine Meldung zu generieren, wenn aufgrund eines Defekts zumindest einer der Leuchten (2) im Beleuchtungssystem die Beleuchtungsstärke bzw. der Lichtstrom zumindest eines Leuchtmittels der zumindest einen Leuchte (2) reduziert ist,
wobei die Steuereinheit (1) dazu eingerichtet ist, während einer Betriebsphase des Beleuchtungssystems auf den Speicher zuzugreifen, um die Steuersignale auf Basis der Lichtplanungsinformation (7) anzupassen, wenn die Meldung, generiert wurde, dass ein Lichtparameter des Beleuchtungssystems aufgrund eines Defekts zumindest einer der Leuchten (2) im Beleuchtungssystem verändert ist,
**dadurch gekennzeichnet, dass**
das Beleuchtungssystem dazu eingerichtet ist, die Steuerparameter (6) der Steuersignale anhand einer vordefinierten Priorisierung anzupassen,
und eine Vorausberechnung und eine Überprüfung, ob durch Änderung von Beleuchtungsparametern eine akzeptable Kompensation des Defekts der zumindest einen der Leuchten (2) durch benachbarte Leuchten erreicht werden kann, durchzuführen,
und dass die Steuereinheit (1) ausgebildet ist, die zumindest eine defekte Leuchte (2) auf Basis von Informationen über die Alterung der Leuchtmittel im Beleuchtungssystem zu identifizieren.

2. Beleuchtungssystem nach Anspruch 1,
wobei die Steuereinheit (1) eingerichtet ist, bei der gemeldeten Veränderung des zumindest einen Lichtparameters angepasste Steuersignale auf Basis der Lichtplanungsinformation (7) zu errechnen und an zumindest eine der Leuchten (2) zu senden.

3. Beleuchtungssystem nach einem der vorhergehenden Ansprüche,
wobei das Beleuchtungssystem zumindest ein passives Beleuchtungselement (9) zusätzlich zu den Leuchten (2) aufweist, welches mittels eines Steuersignals der Steuereinheit (1) ansteuerbar ist.

4. Beleuchtungssystem nach einem der vorhergehenden Ansprüche,
wobei das Beleuchtungssystem eingerichtet ist, um eine Änderung eines Lichtparameters eines Leuchtmittels (2b) durch eine Anpassung eines Steuerparameters (6) von zumindest einem, zu dem Leuchtmittel benachbarten Leuchtmittel (2a, 2c) zu kompensieren.

5. Beleuchtungssystem nach einem der vorhergehenden Ansprüche,
wobei die Leuchten (2) jeweils ein LED-Modul mit einem Betriebsgerät (11) umfassen, und
wobei das LED-Modul eingerichtet ist, um zumindest eine LED, bevorzugt eine Vielzahl von LEDs, anzusteuern.

6. Beleuchtungssystem nach einem der vorhergehenden Ansprüche,
wobei zumindest eine der Leuchten (2) eine Notbeleuchtungseinheit aufweist.

7. Beleuchtungssystem nach einem der vorhergehenden Ansprüche,
wobei das Beleuchtungssystem zumindest aus zwei Beleuchtungssubsystemen (10) aufgebaut ist, und
wobei die Steuereinheit (1) eingerichtet ist, das Steuersignal einer der Leuchten (2) eines ersten Beleuchtungssubsystems (10) anzupassen, um eine der Leuchten (2) eines zweiten Beleuchtungssubsystems (10) zu kompensieren.

8. Beleuchtungssystem nach einem der vorhergehenden Ansprüche,
wobei der Lichtparameter aufgrund einer Alterung zumindest eines der Leuchtmittel in den Leuchten (2) verändert ist.

9. Beleuchtungssystem gemäß einem der vorhergehenden Ansprüche, aufweisend ein Betriebsgerät (11) für eine der Leuchten (2),
wobei das Betriebsgerät (11)
- einen Spannungsumsetzer (14),
- einen Schaltregler (15), und
- eine Kontrolleinheit (12) aufweist,
wobei die Kontrolleinheit (12) eine Schnittstelle (3) aufweist, wobei die Schnittstelle (3) eingerichtet ist, zum Empfangen eines elektrischen Steuersignals von der Steuereinheit (1).

10. Beleuchtungssystem gemäß Anspruch 9,
wobei in dem Betriebsgerät (11) ein Energiespeicher (13) vorgesehen ist, um im Fall eines Spannungsausfalls die eine der Leuchten (2) mit Energie zu versorgen.

## Claims

1. Lighting system comprising:
- a plurality of lamps (2) which are designed to illuminate a part of a building (4),
- a control unit (1) configured to set and control a respective illumination parameter of the lamps (2),
- an interface (3) configured to transmit electrical control signals between the lamps (2) and the control unit (1), wherein the control signals in each case include at least one control parameter (6), wherein by means of the control parameter (6) the lamps (2) can be controlled individually for illuminating the part of the building (4),
- a memory in which at least one item of light planning information (7) of the lighting system is stored, wherein the item of light planning information (7) comprises intended illumination intensities at defined positions in the part of the building which are illuminated by the lighting system, and
- a sensor element (8) which is configured to detect a change in a light parameter of the lighting system, and to generate a notification if the illumination intensity or the luminous flux of at least one lighting means of the at least one lamp (2) is reduced due to a defect in at least one of the lamps (2) in the lighting system,
wherein the control unit (1) is configured to access the memory during an operating phase of the lighting system to adjust the control signals based on the light planning information (7) if the notification has been generated that a light parameter of the lighting system has changed due to a defect in at least one of the lamps (2) in the lighting system,
**characterized in that**
the lighting system is configured to adjust the control parameters (6) of the control signals based on a predefined prioritization,
and to perform a pre-calculation and a check as to whether an acceptable compensation for the defect in at least one of the lamps (2) can be achieved via adjacent lamps by changing illumination parameters,
and **in that** the control unit (1) is designed to identify at least one defective lamp (2) based on information about the aging of the lighting means in the lighting system.

2. Lighting system according to Claim 1,
wherein the control unit (1), in the case of the reported change in at least one light parameter, is configured to calculate adjusted control signals based on the light planning information (7) and to transmit said control signals to at least one of the lamps (2).

3. Lighting system according to either of the preceding claims,
wherein, in addition to the lamps (2), the lighting system has at least one passive illumination element (9) which can be controlled by means of a control signal of the control unit (1).

4. Lighting system according to any one of the preceding claims,
wherein the lighting system is configured to compensate for a change in a light parameter of lighting means (2b) by adjusting a control parameter (6) of at least one lighting means (2a, 2c) adjacent to the lighting means.

5. Lighting system according to any one of the preceding claims,
wherein the lamps (2) in each case comprise an LED module with an operating device (11), and
wherein the LED module is configured to control at least one LED, preferably a plurality of LEDs.

6. Lighting system according to any one of the preceding claims,
wherein at least one of the lamps (2) has an emergency lighting unit.

7. Lighting system according to any one of the preceding claims,
wherein the lighting system is constructed at least from two lighting subsystems (10), and
wherein the control unit (1) is configured to adjust the control signal of one of the lamps (2) of a first lighting subsystem (10) in order to compensate for one of the lamps (2) of a second lighting subsystem (10).

8. Lighting system according to any one of the preceding claims,
wherein the light parameter is changed because of aging of at least one of the lighting means in the lamps (2).

9. Lighting system according to one of the preceding claims, having an operating device (11) for one of the lamps (2),
wherein the operating device (11) has
- a voltage converter (14),
- a switching regulator (15), and
- a control unit (12),
wherein the control unit (12) has an interface (3), wherein the interface (3) is configured to receive an electrical control signal from the control unit (1).

10. Lighting system according to Claim 9,
wherein an energy store (13) is provided in the operating device (11) in order to supply one of the lamps (2) with energy in the event of a power failure.

## Revendications

1. Système d'éclairage comprenant :
- plusieurs lampes (2), qui sont conçues pour éclairer une partie de bâtiment (4),
- une unité de commande (1), conçue pour régler et commander respectivement un paramètre d'éclairage des lampes (2),
- une interface (3), conçue pour transmettre des signaux de commande électrique entre les lampes (2) et l'unité de commande (1), les signaux de commande contenant respectivement au moins un paramètre de commande (6), au moyen du paramètre de commande (6), les lampes (2) pouvant être commandées individuellement pour éclairer la partie de bâtiment (4),
- une mémoire, dans laquelle au moins une information de planification lumineuse (7) du système d'éclairage est enregistrée, l'information de planification lumineuse (7) comprenant des intensités d'éclairage théoriques au niveau de positions définies dans la partie de bâtiment, qui doivent être éclairées par le système d'éclairage et
- un élément capteur (8), qui est conçu pour détecter une modification d'un paramètre lumineux du système d'éclairage et pour générer un message, lorsque l'intensité d'éclairage ou le flux lumineux d'au moins une ampoule de l'au moins une lampe (2) est réduit(e) en raison d'un défaut d'au moins une des lampes (2) dans le système d'éclairage,
l'unité de commande (1) étant conçue pour, pendant une phase de fonctionnement du système d'éclairage, accéder à la mémoire, afin d'adapter les signaux de commande en fonction de l'information de planification lumineuse (7), lorsque le message, selon lequel un paramètre lumineux du système d'éclairage est modifié en raison d'un défaut d'au moins une des lampes (2) dans le système d'éclairage, a été généré,
**caractérisé en ce que**
le système d'éclairage est conçu pour adapter le paramètre de commande (6) des signaux de commande à l'aide d'une hiérarchisation prédéfinie,
et pour réaliser une prévision et une vérification pour savoir si, par modification des paramètres d'éclairage, une compensation acceptable du défaut de l'au moins une des lampes (2) peut être atteinte par le biais de lampes voisines,
**et en ce que** l'unité de commande (1) est conçue pour identifier l'au moins une lampe défectueuse (2) sur la base d'informations concernant le vieillissement des ampoules dans le système d'éclairage.

2. Système d'éclairage selon la revendication 1,
l'unité de commande (1) étant conçue pour, en cas de modification notifiée de l'au moins un paramètre lumineux, calculer des signaux de commande adaptés sur la base de l'information de planification lumineuse (7) et les envoyer à au moins une des lampes (2).

3. Système d'éclairage selon l'une quelconque des revendications précédentes,
le système d'éclairage comportant au moins un élément d'éclairage passif (9) en complément des lampes (2), qui peut être commandé au moyen d'un signal de commande de l'unité de commande (1).

4. Système d'éclairage selon l'une quelconque des revendications précédentes,
le système d'éclairage étant conçu pour compenser une modification d'un paramètre lumineux d'une ampoule (2b) par une adaptation d'un paramètre de commande (6) d'au moins une ampoule (2a, 2c) voisine de l'ampoule.

5. Système d'éclairage selon l'une quelconque des revendications précédentes,
les lampes (2) comprenant respectivement un module à DEL avec un appareil de fonctionnement (11) et
le module à DEL étant conçu pour commander au moins une DEL, de préférence une pluralité de DEL.

6. Système d'éclairage selon l'une quelconque des revendications précédentes,
au moins une des lampes (2) comportant une unité d'éclairage de secours.

7. Système d'éclairage selon l'une quelconque des revendications précédentes,
le système d'éclairage étant constitué d'au moins deux systèmes secondaires d'éclairage (10) et
l'unité de commande (1) étant conçue pour adapter le signal de commande d'une des lampes (2) d'un premier système secondaire d'éclairage (10), afin de compenser une des lampes (2) d'un deuxième système secondaire d'éclairage (10).

8. Système d'éclairage selon l'une quelconque des revendications précédentes,
le paramètre lumineux étant modifié en raison d'une modification d'au moins une des ampoules dans les lampes (2).

9. Système d'éclairage selon l'une quelconque des revendications précédentes, comportant un appareil de fonctionnement (11) pour une des lampes (2),
l'appareil de fonctionnement (11) comportant
- un convertisseur de tension (14),
- un régulateur de commutation (15) et
- une unité de régulation (12),
l'unité de régulation (12) comportant une interface (3), l'interface (3) étant conçue pour recevoir un signal de commande électrique de l'unité de commande (1).

10. Système d'éclairage selon la revendication 9,
un accumulateur d'énergie (13) étant prévu dans l'appareil de fonctionnement (11), pour alimenter, dans le cas d'une panne de courant, l'une des lampes (2) en énergie.
